# EUROPEAN PATENT APPLICATION

(11) **EP 3 041 233 A1**
(43) Date of publication of application: **06.07.2016**
(21) Application number: 14307218.9
(22) Date of filing: 31.12.2014
(51) Int. Cl.: H04N 19/46, H04N 21/00, H04N 21/234, H04N 21/236, H04N 21/44

(54) **High frame rate-low frame rate transmission technique**

(71) Applicant: Thomson Licensing, 92130 Issy-les-Moulineaux (FR)
(72) Inventor: Borel, Thierry, 35576 Cesson-Sévigné (FR); Routhier, Pierre Hugues, Burbank, CA California 91504-3120 (US); Redmann, William, Burbank, CA California 91504-3120 (US)
(74) Representative: Huchet, Anne

(57) **Abstract**

A method for transmitting video content segments includes providing Low Frame Rate LFR and High Frame Rate HFR encoding mode designations for video content segments having static scenes and scenes with motion, respectively. Each video content segment is encoded accordance with its encoding mode designation and then transmitted with its encoding mode designation to enable retrieval and decoding by a decoder. Encoded video content appears as LFR content for processing as LFR content by equipment unaware of the present encoding.

## Description

### TECHNICAL FIELD

This invention relates to a technique for transmitting high-resolution content while maintaining image detail.

### BACKGROUND ART

Previously, television broadcasters converted standard definition content to high definition (HD) and now many convert HD content to Ultra High Definition (UHD) content with resolution as high as 4K and as much as 2160 p lines of picture. UHD content with its higher resolution provides a higher level of detail on static scenes, but as soon as motion is present either in the scene itself or because of motion of the camera, motion blur occurs, drastically reducing the perception of detail of moving objects. Under such circumstances, the content no longer retains its 4K characteristics from a detail-rendering standpoint. Decreasing the amount of time the shutter is open to compensate for such motion blur does not offer a viable solution as the induced judder becomes uncomfortable to watch. Currently, the only viable solution requires increasing the sampling frequency of the scene, while keeping a reasonable shutter angle (180° or larger). However, shooting and transmitting an event at a high resolution and a high frame rate, (e.g., 4K/120 fps) becomes difficult if not impossible since many current transmission devices do not support such formats. Even with devices capable of supporting such formats, transmitting content at such formats becomes very costly in terms of bandwidth. For this reason, broadcasters and cable operators prefer to allocate the fixed bandwidth as multiple (e.g., four) 4K/30 fps channels rather than providing only one 4K/120 fps channel that consumes the same bandwidth.

Thus, a need exists for a technique for transmitting high quality content (4K) while preserving detail rendering even for moving objects.

### BRIEF SUMMARY

It is an object of the present principles to provide a technique for transmitting high quality video while preserving image detail, especially for moving images.

It is another object of the present to provide a technique for interchangeably transmitting low and high frame rate video content.

Briefly, in accordance with an aspect of the present principles, a method and apparatus and system for transmitting video content designates whether the content includes static scenes with high resolution or scenes with motion. The video content undergoes encoding in accordance with the designation so that video content with static scenes is encoded in a Low Frame Rate (LFR) mode, whereas video content with motion is encoded in a High Frame Rate (HFR) mode. Thereafter, the encoded video content is transmitted, along with the content designation, to enable retrieval and decoding by a decoder.

### BRIEF SUMMARY OF THE DRAWINGS

FIGURE 1 depicts a block schematic diagram of a system, in accordance with an aspect of the present principles for encoding, transmitting and decoding video content in accordance with the present principles;
FIGURE 2 illustrates a graphical depiction of a portion of video content with motion in encoded in the High Frame Rate (HFR) mode by the system of FIG. 1;
FIGURE 3 illustrates a graphical depiction of sequences of a portion of video content with static scenes encoded in the Low Frame Rate (LFR) mode by the system of FIG. 1;
FIGURE 4 depicts a stream of alternating sequences of video content encoded in HFR and LFR modes, respectively, with each video content sequence having a designation indicating the encoding mode; and
FIGURE 5 depicts the stream of alternating sequences of video content encoded in HFR and LFR modes of FIG. 4 following decoding in accordance with the designation associated with each sequence indicating the encoding mode.

### DETAILED DESCRIPTION

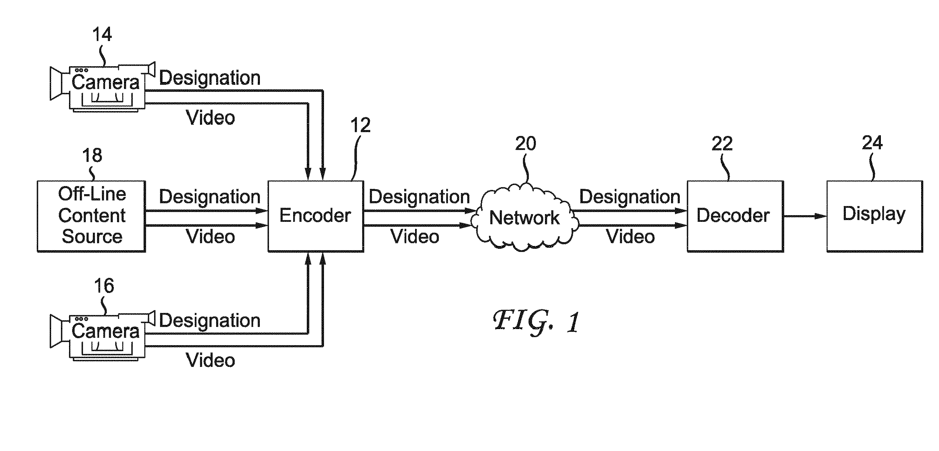

In accordance with an aspect of the present principles, a hybrid content transmission technique transmits static scenes of video with high resolution in a Low Frame Rate (LFR) mode (i.e. 4K/30 fps). Conversely, in accordance with the technique of the present principles, scenes with motion in the video content undergo transmission in a High Frame rate (HFR) mode (i.e. HD/120 fps), with such scenes encapsulated in a LFR image block (i.e. 4K/30 fps). FIGURE 1 illustrates a system 10 for practicing the hybrid transmission technique of the present principles. The system 10 includes an encoder 12 that receives video from a plurality of video sources, including a pair of television cameras 14 and 16, respectively. While the illustrative example of system 10 depicted in FIG. 1 depicts two cameras 14 and 16, the system 10 could easily accommodate a larger number of cameras.

In the illustrative example of FIG. 1, each of the cameras 14 and 16 not only generates a video signal, but also generates a designation, typically in the form of a "flag" that indicates whether the camera video output signal comprises static scenes or scenes with motion. For certain applications, such as broadcasting a sporting event for example, one camera, such as the camera 14, for example, typically provides only relatively static scenes, e.g., scenes of a crowd. Another camera, e.g., camera 16, typically provide video content with motion, for example the camera provides a video output signal of players engaged in a game, e.g., soccer, baseball, football or the like.

As depicted in FIG. 1, the designation provided by each of the cameras 14 and 16 typically takes the form of a signal (e.g., a flag) separate from the video output signal. However, each camera's video signal could include information designating that video signal as being either a static image or an image with motion. Including such information within the video signal itself would thus obviate the need for a separate designation signal.

The encoder 12 receives the video output signal from each of the cameras 14 and 16 along the accompanying designation signal indicating that camera's video output as comprising static scenes or scenes with motion. The encoder 12 encodes the video output signal of each of the cameras 14 and 16 in accordance with the designation accompanying that camera's video output signal regarding with the video signal comprises static images or scenes with motion. Thus, for example, upon receipt of the video output signal of the camera 14, the encoder 12 will encode that video signal in a Low Frame Rate (LFR) mode (e.g., 4K/ 30 fps) if the designation accompanying that video signal indicates that the video has static scenes. Conversely, upon receipt of the video output signal from of the camera 16, the encoder 12 will encode that video signal in a High Frame Rate (HFR) mode (e.g., 4K, 120 fps); if the designation associated with that camera's video signal indicates that the scenes have motion. The encoder 12 encodes the video signal from the camera 16 by encapsulating scenes of the video signal into LFR images block.

In addition to, or in place the video output signals from the cameras 14 and 16, the encoder 12 can also receive and encode video signals from one or more off-line content sources, as exemplified by off-line content source 18 which could comprise a storage device or a piece of television studio broadcast equipment. In addition to providing a video output signal to the encoder 12, each off-line content source 18 also provides a designation indicating whether the output video signal from the off-line content source comprises static scenes or scenes with motion. As with each of the cameras 14 and 16, the output video signal itself of the off-line content source 18 could include information designating whether the output signal comprises static scenes or scenes with motion, thereby obviating the need for a separate designation.

As discussed above, the cameras 14 and 16 are typically dedicated static scenes, and scenes with motion, respectively, so their respective designation signals may be fixed. In contrast, the off-line content source 18 can provide either kind of video output signal. Indeed, depending on the nature of video being output by the on-line content source 18, an operator could manually adjust the designation set based on the operator's assessment of the video output signal of the off-line source. Alternatively, the off-line content source 18 could generate its designation automatically, based on its analysis of the video content using motion analysis algorithms for example.

The encoder 12 encodes the video signals received from the cameras 14 and 16 and/or the off-line content source 18 to generate an encoded output signal, and an accompanying designation indicating nature of the encoder's video output signal as discussed above. A network 20 transmits the video output signal of the encoder 12 along with the designation of that signal, to a decoder 22 for decoding to yield a decoded video output signal for presentation on a display device 24. In practice, the decoder 22 can comprise part of a set-top box or the like for selecting content for display on the display device 24. In some instances, the decoder 22 could comprise part of the display device 24.

As discussed above in connection with the cameras 14 and 16 and the off-line content source 18, the encoder 12 can include information in its video output signal indicating whether the encoder has encoded that signal in a Low Frame Rate (LFR) or High Frame Rate (HFR) mode. Including information within the encoder video output signal whether the signal is encoded in either a LFR or HFR mode thus will obviate the need to generate a separate designation.

The decoder 22 decodes video signal received from the encoder in accordance with the accompanying designation indicating whether the incoming signal is LFR or HFR encoded. As discussed above, the incoming video signal received by the decoder 22 of FIG. 1 could itself include information the type of encoding (LFR or HFR), thus obviating the need for a separate designation indicating the encoding mode. Using the encoding designation, or in the absence of that designation, the encoding information from the incoming video signal itself, the decoder 22 can correctly decode the incoming video signal based on whether the incoming signal is LFR or HFR encoded. In the case of an LFR-encoded video signal, each high resolution frame is contained in its own LFR image block and each is delivered at the low frame rate to display device 24. In the case of an HFR-encoded video signal, multiple frames are encapsulated into each LFR image block, as described in US Provisional Patent Application 62/005,397 filed May 30, 3014 incorporated by reference herein. The decoder 22 will successively extract each one of the multiple frames at the high frame rate for delivery to the display device 24 at the high frame rate. In practice, the display 24 has a digital interface with the encoder 22, for example a High Definition Multimedia Interface (HDMI), to enable the display device to receive separate LFR-mode and HFR-mode video signals. The display 24 has the capability of switching in real time between the LFR and HFR modes to properly display video signals in each mode. In some embodiments, all of the video signal, both high resolution LFR frames and LFR image blocks containing multiple HFR-encoded frames, is transferred with an interface such as HDMI to a monitor comprising both decoder 22 and display 24.

Note that all output from encoder 12 appears as a higher resolution LFR stream, whether originally provided as LFR images natively at the higher resolution, or HFR images encoded into the higher resolution LFR blocks. The advantage is that intermediate components, e.g., network 20 which may comprise communication links and video or stream switching elements (not shown), can operate without needing to be aware of the nature of the stream from encoder 12, particularly if the HFR/LFR mode designation is embedded in the stream. Not until received by decoder 22 is any element required to process the stream as anything other than an ordinary higher resolution LFR stream.

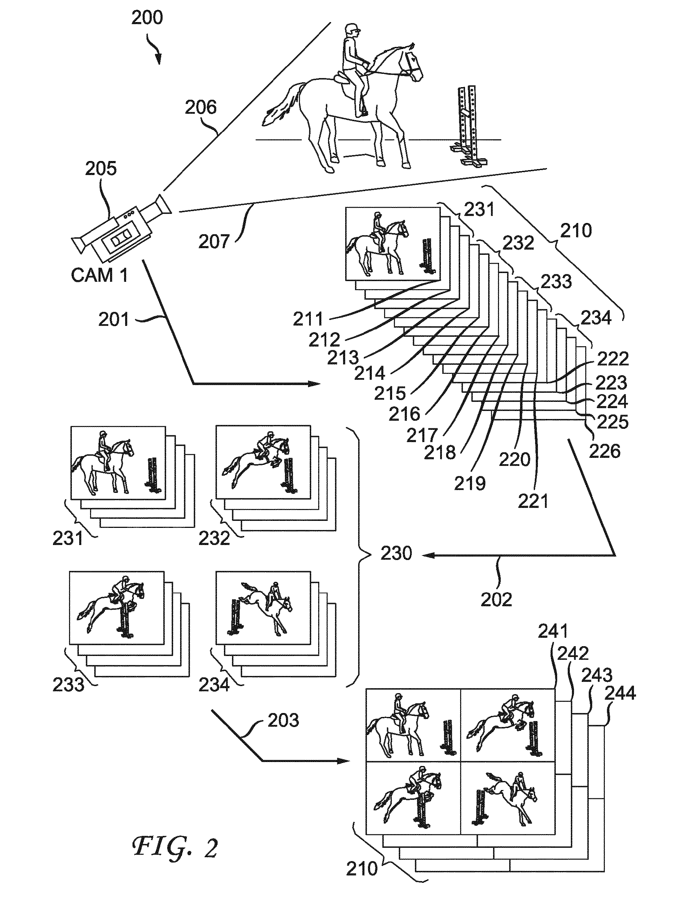

FIG. 2 depicts an exemplary frame rate compression process 200 in accordance with an aspect of the present principles. As depicted in FIG. 2, a High Frame Rate (HFR) camera 205, similar to the high frame rate camera 16 of FIG. 1, has a field of view 206 subtending a subject 207. In operation, the camera 205 will output a video output signal 201 comprising a stream of HFR images of the subject. A portion 210 of the HFR image stream generated by the camera 205 appears in FIG. 2 and consists of individual, sequential frames 211-226.

In the example depicted in FIG. 2, the subject 207 comprises a man riding a horse. Images 211-226 of the subject 207 appear in FIG. 2 with an exaggerated timescale so that the individual images exhibit clearly discernable differences. The images depicted come from the work "Jumping a hurdle, black horse" by Eadweard Muybridge, 1887 and were chosen because of they are familiar to many and present a recognizable sequence, which is helpful to the understanding of the present principles.

The images 211-226 of the portion 210 of the HFR image stream undergo capture during step 202, at which time the images accumulate in a capture buffer 230, typically located in the camera 205 although depicted separately from the camera in FIG. 2. For ease of processing, the images 211-226 are grouped into sub-sequences 231-234. The sub-sequences of images undergo encoding by the encoder 12 of FIG. 1 during an encoding process 203 depicted in FIG. 2. In accordance with an aspect of the present principles, the encoding process 203 packs High Frame Rate (HFR) images into lower-frame rate (LFR) images blocks as described in US Provisional Patent Application 62/005,397 filed May 30, 3014 incorporated by reference herein. For example, the first image from each of the sub-sequences 231-234 is consolidated into the single LFR image block 241. Likewise, the second image from each sub-sequence is consolidated into LFR image block 242, and the third image and fourth image from each sub-sequence are packed into LFR image blocks 243 and 244, respectively. In addition to generating the LFR image blocks, the camera 205 of FIG. 2 will also generate a designation, as discussed above, which indicated that the camera output signal is encoded in the HFR mode.

In an embodiment that uses image compression, the LFR image blocks 241-244 may be compressed (e.g., "coded") individually, for example using the well-known JPEG or JPEG-2000 compression schemes. If a motion-based compression scheme is chosen, e.g., MPEG-2 or H.264/MPEG-4, then LFR image blocks 241-244 would form an encoded "group of pictures" (GOP) 240. Three kinds of frame encoding are in common use in motion-coded video: I-frames, P-frames, and B-frames. I-frames are "intra coded", that is, the frames are encoded without any reference to other frames, and therefore can stand alone. P-frames or "predicted frames" are encoded relative to a previous reference frame or frames and exploit the redundancies between them for efficient representation (generally a smaller representation as compared to an I-frame). B-frames, or "bidirectional predicted" frames are encoded by exploiting similarities between both prior and later reference frames. A significant portion of the encoding process for P- and B-frames is to identify regions in the reference frame(s) that are also present in the frame being compressed and to estimate the motion of such common regions and encode them as a motion vector. In some embodiments, encoders are allowed to use not just I-frames as references, but other P- or B-frames as well. When suitable, the motion vector representation for a region of the current frame is usually more compact than a more explicit representation for the region's pixels.

Note that the tiling of the HFR images 211-226 into LFR image blocks 241-244 shown in FIG. 2 retains the temporal ordering and sequential nature of the sub-sequences 231-234, which provides the advantage that the differences between consecutive HFR frames, for example in sub-sequence 232, are maintained after composition in to LFR frames 241-244. Accordingly, since the HFR is higher than the LFR, the expected motion vectors between consecutive HFR frames will generally be smaller than those for a traditionally captured sequence (not shown) at the lower frame rate. Likewise, the corresponding similar regions between consecutively captured frames will generally exhibit more similarity than if the capture frame rate were slower, since less time has passed between consecutive images of the subject at the HFR. Accordingly, the expectation is that compression schemes that exploit motion in the composite images of the encoded GOP 240 will be particularly effective, since within each quadrant of those composite images, the apparent temporal increment between consecutive LFR image blocks 241-244 corresponds to the HFR, even though the image blocks 241-244 of the GOP 240 will be delivered at the LFR. There is, however, a temporal discontinuity in each quadrant between the last LFR frame 244 of the current encoded GOP 240 and the first LFR frame (not shown) of the next GOP (not shown). The magnitude of this temporal discontinuity in the example of FIG. 2 is 3x the LFR interval, or 22x the HFR interval. Because of this temporal discontinuity, compression schemes that attempt to exploit similarity between the end of one GOP and the start of the next (i.e., using B-frames), will not fair particularly well and, accordingly, traditional motion encoding techniques in this embodiment is preferably limited to I-frames and P-frames.

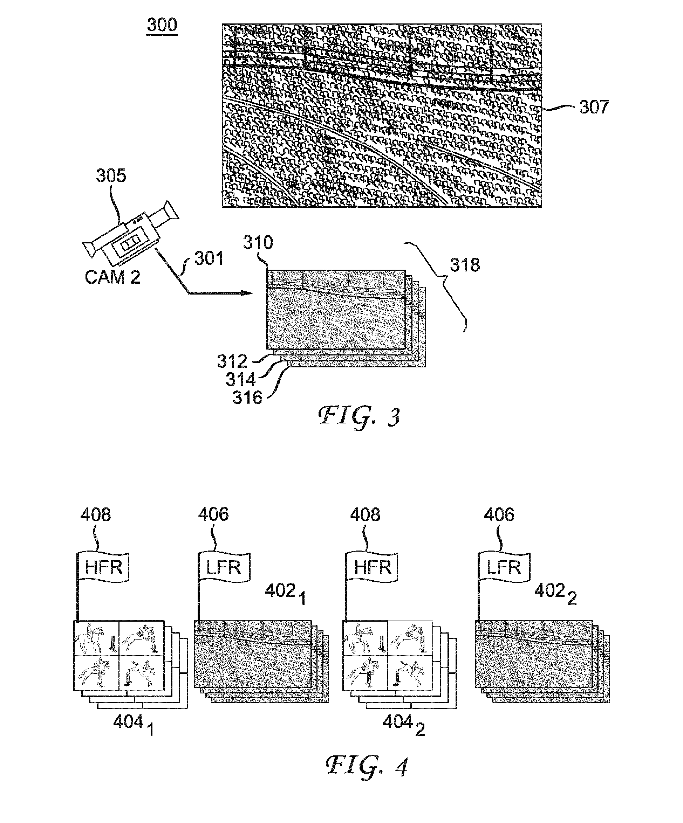

FIG. 3 depicts an exemplary encoding process 300 in accordance with another aspect of the present principles. As depicted in FIG. 2, a Low Frame Rate (LFR) camera 305, similar to the LFR camera 14 of FIG. 1 captures a generally static image, illustratively depicted as a crowd 307. In operation, the camera 305 will output a video output signal 301 comprising a stream of LFR images of the crowd 307. A portion 310 of the LFR image stream generated by the camera 305 consists of a sequence of LFR frames 310-316. In accordance the teachings of the present principles, the encoding process 300 generates higher resolution LFR images in the form of whole frames at the low frame rate, whereas multiple lower resolution HFR images are encapsulated into each LFR image block 241-244 as described in US Provisional Patent Application 62/005,397 filed May 30, 3014. In addition to generating the LFR images, the camera 305 of FIG. 3 will generate a designation, as discussed above, which indicates that the camera output signal is encoded in the LFR mode.

An encoder, such as encoder 12 of FIG. 1, that receives video signals encoded in both LFR and HFR modes will output a multi-frame output stream, as depicted in FIG. 4 comprised of separate sequences of LFR images, illustratively depicted by LFR sequences 402₁ and 402₂ and LFR image blocks which encapsulate HFR image sequences, illustratively depicted by LFR image blocks 404₁ an 404₂. Collectively, the LFR images and the LFR image blocks comprise video content segments. The LFR frame sequences and LFR image blocks (i.e., the video content segments) each have associated designations, represented by the flags 406 and 408, respectively, indicating the encoding mode (i.e., LFR and HFR, respectively). Although FIG. 4 shows an HFR image block and LFR image sequence in alternating fashion, an encoder could output an arbitrarily long succession of LFR image sequences followed by an arbitrary number of HFR image blocks or vice versa. While FIG. 4 depicts the LFR image sequences and HFR image blocks as having separate designations, represented by the flags 406 and 408, respectively, the LFR image sequences and HFR image blocks could include information indicating their respective encoding mode, thus obviating a designation separate and apart from the image sequence and image block.

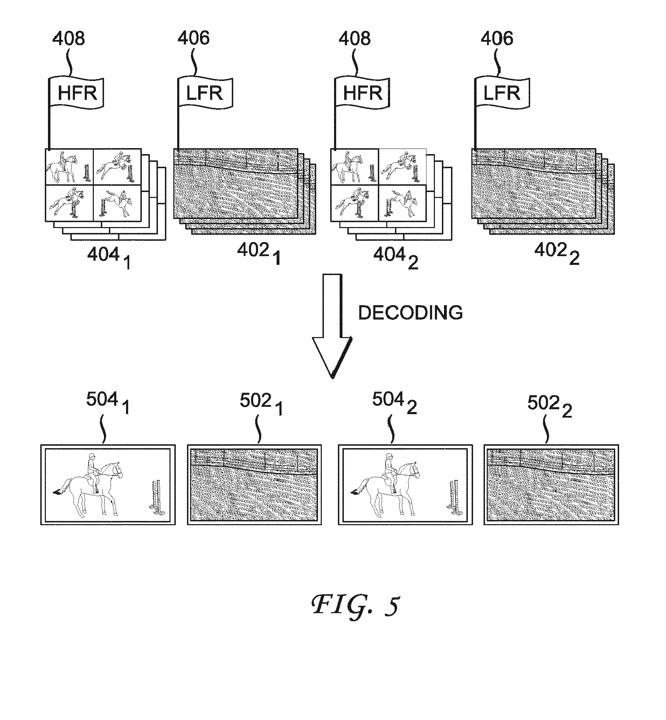

FIG. 5 depicts the decoding of the LFR image sequences 402₁ and 402₂ and LFR image blocks 404₁ and 404₂ previously discussed in connection with FIG. 4. A decoder, such as the decoder 22 of FIG. 1, will decode each incoming LFR image sequence and LFR image block in accordance with its accompanying designation (or in the absence of such designation, by examining each image sequence or image block for encoding information incorporated therein). Following decoding, each of the LFR image sequences 402₁ and 402₂ undergoes display in screens 502₁ (only one higher-resolution frame of four shown) and 502₂ (only one higher-resolution frame of four shown) in FIG. 5. Each of the LFR image blocks 404₁ and 404₂ undergoes decoding to successively strip off the individual lower-resolution HFR images encapsulated within each LFR image block to display the HFR image at the high frame rate as depicted in display screens 504₁ (only one lower-resolution frame of sixteen shown) and 504₂ (only one lower-resolution frame of sixteen shown), respectively.

The foregoing describes a technique for interchangeably transmitting low and high frame rate video content to maintain high quality video while preserving image detail especially for moving images.

## Claims

1. A method for transmitting video content segments, comprising:
providing a Low Frame Rate LFR and a High Frame Rate HFR encoding mode designations for video content segments having static scenes and scenes with motion, respectively;
encoding each video content segment in accordance with its encoding mode designation; and
transmitting the encoded video content with its encoding mode designations to enable retrieval and decoding by a decoder.

2. The method according to claim 1 wherein a video content segment having a HFR encoding mode designation is encoded by encapsulating a plurality of HFR images into a LFR image block.

3. The method according to claim 1 wherein a video content segment having a LFR encoding mode designation is encoded to yield a sequence of at least one LFR images.

4. The method according to claim 1 wherein encoding mode designation includes generating an encoding mode designation separate from the video content segment.

5. The method according to claim 1 wherein the encoding mode comprises including an encoding mode designation within the video content segment.

6. A method for processing received video content segments, comprising:
determining for each received video content segment one of a Low Frame Rate LFR and a High Frame Rate HFR encoding mode designation for that received video content segment indicating whether that segment includes static scenes or scenes with motion, respectively;
decoding each video content segment in accordance with its encoding mode designation; and
providing each decoded video content segment to a display device.

7. The method according to claim 6 wherein a video content segment having a HFR encoding mode designation is decoded by stripping a plurality of HFR images from encapsulation in a LFR image block.

8. The method according to claim 6 wherein a video content segment having a LFR encoding mode designation is decoded to yield a sequence of at least one LFR images.

9. The method according to claim 6 wherein the encoding mode designation includes receiving an encoding mode designation separate from the video content segment.

10. The method according to claim 6 wherein the encoding mode designation includes examining the video content segment for an incorporated encoding mode designation.

11. Apparatus, comprising:
an encoder configured to:
- receive Low Frame Rate LFR and High Frame Rate HFR encoding mode designations for received video content segments having static scenes and scenes with motion, respectively; and:
- encode each video content segment in accordance with its encoding mode.

12. The apparatus according to claim 11 wherein the encoder encodes a video content segment having a HFR encoding mode designation by encapsulating a plurality of HFR images into a LFR image block.

13. The apparatus according to claim 11 wherein the encoder encodes a video content segment having a LFR encoding mode designation to yield a sequence of at least one LFR images.

14. The apparatus according to claim 11 wherein the encoder receives the encoding mode designation separate from the video content segment.

15. The apparatus according to claim 11 wherein encoder receives the encoding mode designation as part of the received video content segment.

16. Apparatus comprising,
a decoder configured to:
- establish for each received encoded video content segment one of a Low Frame Rate (LFR) and a High Frame Rate (HFR) encoding mode designation depending on whether that received encoded video segment includes static scenes or scenes with motion, respectively, and:
- decode each received encoded video content segment in accordance with its encoding mode designation.

17. The apparatus according to claim 16 wherein the decoder decodes a video content segment having a HFR encoding mode designation by stripping a plurality of HFR images from encapsulation in a LFR image block.

18. The apparatus according to claim 16 wherein the decoder decodes a video content segment having a LFR encoding mode designation to yield a sequence of at least one LFR images.

19. The apparatus according to claim 16 wherein the decoder receives an encoding mode designation separate from the video content segment.

20. The apparatus according to claim 16 wherein the decoder can detect an incorporated encoding mode designation within a received video content segment.
